# EUROPEAN PATENT SPECIFICATION

(11) **EP 0 822 346 B1**
(45) Date of publication and mention of the grant of the patent: **23.05.2001**
(21) Application number: 97110927.7
(22) Date of filing: 02.07.1997
(51) Int. Cl.: F16B 7/14, F16B 2/18

(54) **Stick of variable length and relative locking device**
Stock mit änderlicher Länge und Verriegelungsvorrichtung dafür
Canne de longueur variable et dispositif de verrouillage rapporté

(30) Priority: 02.08.1996 IT MI961695
(43) Date of publication of application: 04.02.1998
(73) Proprietor: Pronzati, Lorenzo, 20010 Vanzago (Milano) (IT)
(72) Inventor: Pronzati, Lorenzo, 20010 Vanzago (Milano) (IT)
(74) Representative: Petruzziello, Aldo

(56) References cited:
- EP-A- 0 641 578
- WO-A-92/00834
- DE-U- 8 428 699

## Description

The present invention relates to a stick of adjustable variable length and a relative locking device.

Although the invention can be applied to any type of stick for sports, medical, ecological and other uses, for simplicity's sake specific reference will be made herein to ski sticks.

Various types of ski sticks are known whose length can be adjusted to adapt to the height of the user.

Among the systems proposed, the most widely used is that of providing for telescopic sliding of two tubes one inside the other, and locking by means of a special clamp that is tightened on the outer tube.

EP-A-641 578 describes such a clamp which is particularly advantageous in that it has a somewhat flattened profile and has no projecting parts when the clamp is in the closed position. This clamp substantially comprises a hollow cylindrical body, open on one side, where the cam end of a closing lever is hinged.

Such a clamp, though being technically valid, has shown some drawbacks during the opening stage. In fact, since the control lever of this device acts as the clamp closing cam, at the end of the stroke it is pressed against the outer surface of the cylindrical body of the clamp and/or tube of the stick, so that a certain initial force must be exerted to lift this lever and cause the clamp to open. This operation is sometimes rather difficult to carry out, especially for weaker individuals, particularly in low temperature situations.

The object of the invention is to improve the locking device according to the above mentioned patent EP-A-641 578, eliminating the drawbacks described above and allowing easy opening of the device, with minimum effort.

Another object of the invention is to allow improved closure of the locking device.

These objects are achieved, according to the invention, with the characteristics listed in the appended independent claims.

Preferred embodiments of the invention are apparent from the dependent claims.

Basically, according to the invention, the clamp operating cam is freed from the maneuvering lever, allowing a certain angular play between lever and cam.

In this way, when the locking device is in the closing position, the lever can be raised without the slightest effort, causing it to move through the above mentioned angle, so that there is good grip for subsequent opening, also drawing the cam into rotation.

Furthermore, the fact of having freed the cam from the maneuvering lever, makes it unnecessary to go past dead center to keep the lever in the closed position, as was the case with conventional devices.

Lastly, the sides of the operating lever can be provided with two teeth which enter the corresponding seats provided in the body of the clamp, causing a click which indicates perfect closure of the device.

Further characteristics of the invention will be clearer from the detailed description that follows, referring to a purely exemplary and therefore non-limiting embodiment, illustrated in the appended drawing, in which:
Figure 1 is a plan view of a locking device according to the invention mounted on a ski stick and shown in the closed position;
Figure 2 is similar view to that in Figure 1, rotated downward 90°;
Figure 3 is a view of the locking device alone, seen from the opposite side to that in Figure 1 and shown in the open position;
Figure 4 is longitudinal section taken along the line IV-IV in Figure 7;
Figure 5 is an end view of the locking device in the open position, taken from the lefthand side of Figure 3;
Figure 6 is a view like that in Figure 5 in the closed position;
Figure 7 is a median cross section of the locking device in the closed position, taken for example along the plane VII-VII of Figure 2;
Figure 8 is an end view like that in Figures 5 and 6, showing the maneuvering lever in three different positions;
Figure 9 is a sectional exploded view of the lever and the relative cam;
Figure 10 is a sectional view like that in Figure 9, with the lever and the cam in the assembled condition and in two different angular positions.

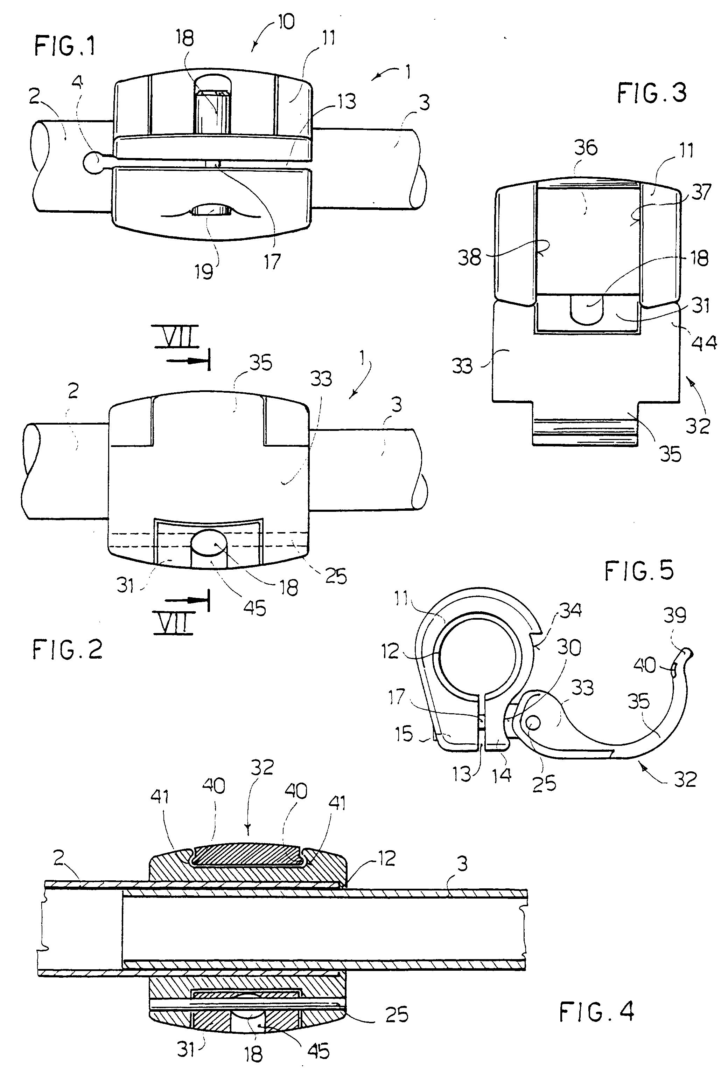

With reference to these figures, and in particular to Figures 1 and 2, a partial view of a ski stick 1 is shown, comprising an upper tubular element 2, bearing at its distal end a grip (not shown) and a lower tubular element 3, ending in a point and a disk (not shown). The lower tubular element 3 has a slightly smaller diameter than the upper element 2, so that it can slide telescopically inside the latter (see Fig. 4). Furthermore, in the upper tubular element 2, coinciding with the end thereof proximal to the tubular element 3, a longitudinal slit 4 is provided, which allows its diameter to be narrowed following external pressure, and thus clamped on the tubular element 3, so that axial sliding is prevented.

The locking device according to the invention, indicated as whole with reference numeral 10 is situated at the join between the two tubes 2 and 3.

The device 10 comprises a hollow cylindrical body 11, which is disposed around the terminal section 9 of the tubular element 2 and has an inner annular ridge 12, against which the end of the tube 2 abuts (see in particular Figure 4). The hollow cylindrical body 11 has a longitudinal cut or slot 13, delimited by two opposite longitudinal projections 14, 15 in said body 11.

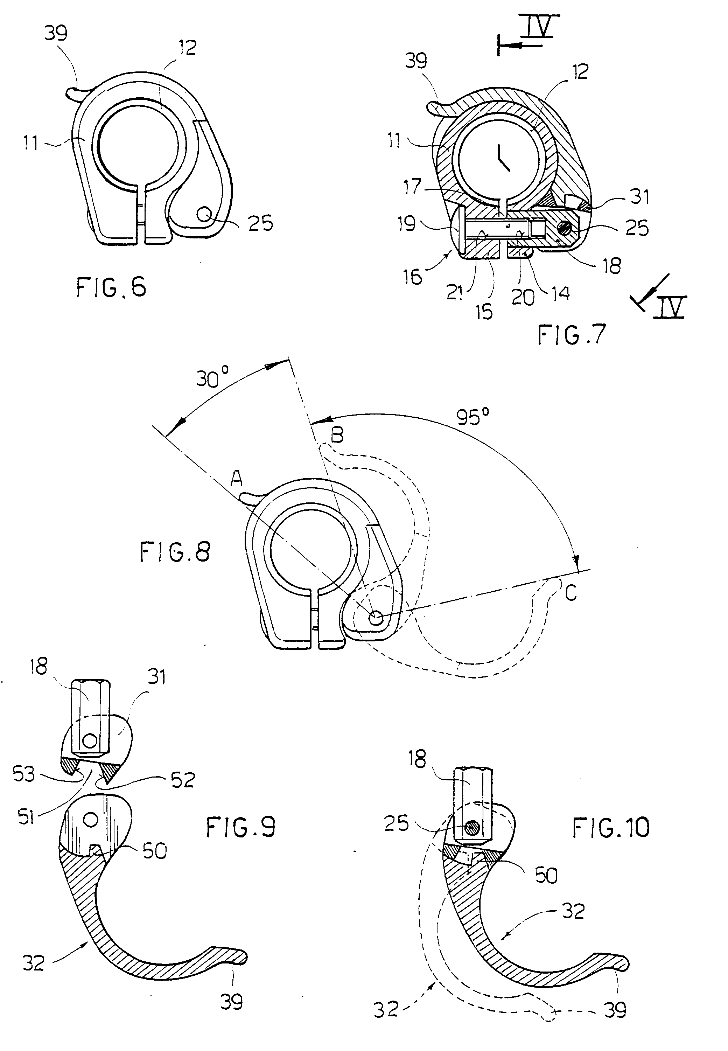

Coaxial through holes able to house a pivot support 16 are provided in said projecting parts 14, 15 (see in particular Figure 7). The pivot support 16 is essentially composed of a screw 17, which screws into a nut 18, so as to be able to regulate the length of the pivot. The screw 17 has a head 19, which abuts on the outer side of the projection 15, whilst the nut 18 is housed completely in the corresponding hole 20 provided in the projection 14, which has a greater diameter than the hole 21 provided in the projection 15 for passage of the screw 17. At the end of the nut 18 a hole 22 is also provided, for connecting of the cam and the maneuvering lever of the device, as will be described better below.

In fact, on the outer side of the projection 14 a cam surface 30 is provided, shaped in a slightly concave manner (see in particular Figure 5), so that when a force is applied against said surface 30, the projection 14 is pushed against the projection 15 through the elasticity of the material making up the body 11, normally plastic, thereby causing closure of the clamp and thus clamping of the tubes 2, 3 without any possibility of reciprocal sliding.

Said closing or opening force on the cam surface 30 is exerted by means of a cam 31, operated by a lever 32, constituting a separate element from the cam 31.

The lever 32 and the cam 31 are assembled together with each other and with said pivot support 16, by means of a pin 25, which is inserted in the aligned holes provided in said elements, involving the entire length of the device.

The lever 32 has a curved course and such a shape as to enter a corresponding seat provided in the cylindrical body, fitting it perfectly without projecting from its outer profile. In particular, the lever 32 has a base portion 33 having the same width as the cylindrical body 11, and able to position itself, when closed, in a corresponding seat 34 provided in the body 11, by means of a reduction in the thickness of the corresponding section, along the whole length of the body. The remaining part 35 of the lever 32, up to the free end, has a smaller width than the length of the body 11, and seats in a corresponding rectangular seat 36 with a corresponding width, provided in the body 11 and delimited by respective opposite vertical walls 37, 38.

The free end 39 of the lever 32 is bent slightly outward and is the only part projecting from the profile of the clamp, to facilitate gripping during opening, as will be better described below.

Furthermore, near the end 39 of the lever 32 a pair of side teeth 40 are provided which engage in corresponding hollows 41 provided in said opposite side walls 37, 38 of the cylindrical body 11, causing a click of the lever during closing.

The base portion 33 of the lever 32 is fork-shaped, so as to enclose between its prongs 44 the cam 31, which in turn has a central cavity 45, inside which is housed the nut 18 of the pivot support 16.

As can be seen better from the sections in Figures 9 and 10, the shape and assembly of the cam 31 and the lever 32 are such as to allow the latter a certain free angle of rotation, about 30° (see Figure 8), in which the movement of the lever is not transferred to the cam.

This is achieved by making a tooth-shaped profile 50 in the base of the lever 32, which seats in a corresponding seat 51, substantially V- shaped with a flattened base, provided in the cam 31 (Figure 9). The width of the seat 51 is greater than the thickness of the tooth 50, so that the latter can move inside the seat, coming to rest, at the end of the stroke, against the respective side walls 52, 53 thereof, following a rotation in one direction and the other of the lever 32, as shown in Figure 10 with solid and broken lines, respectively.

Provision of this angular play between the lever 32 and the cam 31 offers the considerable advantage, when the lever is in the closed position, of being able to raise the lever sufficiently, without exerting the least force, from position A to position B shown with a broken line in Figure 8. In position B the lever can be gripped much more effectively to move it from the open position C, making the can 31 rotate, and thus opening the locking device. The angle of rotation between positions B and C is indicated as 95° in Figure 8.

It is only specified that in the neutral stroke to pass from position A to position B during opening of the lever 32, it is necessary only to overcome the resistance of the coupling between the teeth 40 and the respective notches 41 which is obviously rather weak.

Freeing the lever 32 from the cam 31 has made it possible to achieve a further advantage with respect to conventional systems in which the lever and the cam were made in a single body.

In these known systems, in fact, during closure the cam had to pass dead center during closing in order to keep the lever in the closed position. With the system according to the invention, on the other hand, the lever 32 makes it possible to position the cam 31 in a position that corresponds exactly to dead center, thus avoiding a lessening, albeit small, of the closing pressure between the tubes 2, 3 which normally occurs if dead center is passed.

Moreover, the locking device according to the invention makes it possible to adjust the closing pressure and/or to adapt to tubes of slightly different diameters, regulating the pre-closing force of the cylindrical body 11 by regulating engagement of the screw 17 in the nut 18.

From what has been described the advantages of the arrangement proposed by the invention are apparent. However it is clear that the invention is not limited to the embodiment previously described and illustrated in the appended drawings, but is open to numerous changes to the details that are within the scope of an expert in the field. In particular, the ski stick can be divided into more than two tubular elements that can slide telescopically one inside the other, providing a locking device according to the invention to join adjacent tubular elements. According to a preferred embodiment, the ski stick comprises three tubular elements and two locking devices.

It is also apparent that the invention protects the locking device in itself, applied to clamping of any two tubular telescopic elements, forming, for example, an orthopedic stick, a stick for window cleaning, or other.

## Claims

1. A stick of variable length, comprising at least two tubular elements:
- an upper tubular element (2) ending in a grip,
- a lower tubular element (3),
said tubular elements (2,3) being joined together telescopically and being able to slide one inside the other, wherein the upper element (2) can be clamped on the lower element (3) to prevent axial sliding, and
- at least one locking device (10) comprising a hollow cylindrical body (11), able to house the region of joining between said tubular elements (2, 3), and having a longitudinal slit (13) extending for its whole length and delimited by opposite projections (14, 15) of the body (11), through which passes a pivot support (16), to which is pivotally connected a lever (32) with a cam profile (31), able to exert a pushing action during closure which tends to bring said projections (14, 15) together, and thus to clamp said hollow cylindrical body (11) on the tubes (2 and 3), and exert an opposite action during opening,
characterized in that said lever (32) is separate from said cam (31) and can rotate freely through a certain angle with respect to it, without drawing it into rotation, so that during opening the lever (32) can be raised from the profile of the body (11) with minimum effort, to be brought into a position that facilitates gripping by the user.

2. An adjustable stick according to claim 1, characterized in that said lever (32) has at its base portion, a tooth-shaped profile (50) seating loosely in a cavity (51) in the cam (31), abutting against one or the other of the side walls (52, 53) of said cavity (51) through rotation in one direction or the other of the lever (32), thus causing a neutral stroke of the lever (32).

3. An adjustable stick according to claim 1 or 2, characterized in that said angle of free rotation of the lever (32) with respect to the cam (31) is about 30°.

4. An adjustable stick according to any one of the preceding claims, characterized in that said lever (32) seats in a corresponding seat (34, 36) of the body (11), so as not to project therefrom, reciprocal click hooking means (40, 41) being provided respectively on the lever (32) and in the body (11) to indicate that closure of the device has occurred.

5. A stick of adjustable length according to claim 4, characterized in that said lever (32), in the closed position, places said cam (31) in a position corresponding exactly to dead center.

6. A stick of adjustable length according to any one of the preceding claims, characterized in that said lever (32) has a fork-shaped base portion, which encloses between its prongs said cam (31) which has a central cavity (45) housing one end of said pivot support (16), the lever (32), the cam (31) and the pivot support (16) having aligned holes for fixing of the whole by means of a pin (25), extending the entire length of the hollow cylindrical body (11).

7. A stick of adjustable length according to any one of the preceding claims, characterized in that said pivot support (16) is adjustable in length to regulate the clamping pressure of the locking device.

8. A stick of adjustable length according to any one of the preceding claims, characterized in that said hollow cylindrical body (11) has, at one end, an inner annular ridge (12), forming a stopping surface for the end of said upper tubular element (2).

9. A stick according to any one of the preceding claims, characterized in that it comprises at least one intermediate tubular element between said upper tubular element (2) and said lower tubular element (3), respective locking devices (10) being provided between said intermediate element and said upper (2) and lower (3) elements.

10. A locking device for a cylindrical element (2,3), comprising hollow cylindrical body (11) suitable for housing said cylindrical element (2, 3) and having a longitudinal slit (13), delimited by opposite projections (14, 15) of said cylindrical body (11), said projections (14, 15) being passed through horizontally by a pivot support (16), at one end of which is pivotally connected a lever (32) with a cam (31), acting against a cam surface (30) provided on the outer wall of said projection (14) to draw the projections (14, 15) together or apart, and thus to clamp said hollow cylindrical body (11) on the cylindrical element (2, 3), or loosen said cylindrical body (11), characterized in that said lever (32) is a separate element from the cam (31) and can rotate freely with respect thereto through a predetermined angle, which causes a neutral stroke of the lever (32), during which said cam (31) is not drawn into rotation.

11. A locking device according to claim 10, characterized in that said lever (32) has, at its base portion, a tooth-shaped profile (50) seating loosely in a seat (51) of said cam (31) so that following rotation of the lever (32) in one direction or the other, said tooth (50) abuts against one or the other of the side walls (52, 53) of said seat (51), causing a neutral stroke of about 30°.

12. A locking device according to any one of claims 10 to 11, characterized in that said lever (32) seats in the closed position in a seat (34, 36) in said hollow cylindrical body (11), without projecting from the outer profile thereof, click means (40, 41) being provided for hooking of said lever (31) and said hollow cylindrical body (11) to indicate that closure of the lever has taken place.

## Patentansprüche

1. Stock mit variabler Länge, der mindestens zwei röhrenförmige Elemente umfaßt:
- ein oberes Röhrenelement (2), das in einem Griff endet,
- und ein unterers Röhrenelement (3),
wobei die genannten Röhrenelemente (2, 3) teleskopisch miteinander verbunden sind und ineinander hin- und hergleiten können, und das obere Element (2) am unteren Element verriegelt werden kann, um dessen axiales Gleiten zu vermeiden, und
- mindestens eine Feststellvorrichtung (10), die einen hohlen zylindrischen Körper (11) umfaßt, der geeignet ist, den Kupplungsbereich zwischen den genannten Röhrenelementen (2, 3) zu beherbergen, und der einen Längsschlitz (13) aufweist, der sich über die ganze Länge erstreckt und durch gegenüberliegende Vorsprünge (14, 15) des Körpers (11) begrenzt wird, durch die ein Haltezapfen (16) führt, mit dem ein Hebel (32) mit einem Nockenprofil (31) drehbar verbunden ist, das in der Lage ist, bei der Schließung eine Schubwirkung auszuüben, die die besagten Vorsprünge (14, 15) dazu bringt, sich einander zu nähern und folglich den genannten zylindrischen Hohlkörper (11) an den Röhren (2 und 3) zu arretieren und bei der Öffnung die entgegengesetzte Wirkung auszuüben,
dadurch gekennzeichnet, daß der genannte Hebel (32) von dem genannten Nocken (31) getrennt ist und sich über einen bestimmten Winkel im Verhältnis zu ihm frei drehen kann, ohne ihn mitzudrehen, so daß der Hebel (32) bei der Öffnung vom Profil des Körpers (11) mit geringem Kraftaufwand angehoben werden kann, um in eine Position gebracht zu werden, die das Ergreifen durch den Benutzer vereinfacht.

2. Ein einstellbarer Stock nach Anspruch 1, dadurch gekennzeichnet, daß der genannte Hebel (32) an seinem Grundabschnitt ein Zahnprofil (50) aufweist, das lose in einem Hohlraum (51) im Nocken (31) untergebracht ist und dabei jeweils durch die Umdrehung in der einen oder anderen Richtung des Hebels (32) gegen die eine oder andere der Seitenwände (52, 53) des genannten Hohlraums (51) stößt, wodurch ein Leerlauf des Hebels (32) verursacht wird.

3. Ein einstellbarer Stock nach Anspruch 1 oder 2, dadurch gekennzeichnet, daß der genannte freie Drehungswinkel des Hebels (32) im Verhältnis zum Nocken (31) etwa 30° beträgt.

4. Ein einstellbarer Stock nach einem beliebigen der vorausgegangenen Ansprüche, dadurch gekennzeichnet, daß der genannte Hebel (32) in einem entsprechenden Sitz (34, 36) des Körpers (11) untergebracht ist, und zwar so, daß er nicht vorragt, wobei gegenseitige Schnapp-Kupplungselemente (40, 41) jeweils am Hebel (32) und am Körper (11) vorgesehen sind, um die erfolgte Verriegelung der Vorrichtung anzuzeigen.

5. Ein Stock mit einstellbarer Länge nach Anspruch 4, dadurch gekennzeichnet, daß der genannte Hebel (32) in Verschlußstellung den genannten Nocken (31) in perfekt mit dem Totpunkt übereinstimmender Position anordnet.

6. Ein Stock mit einstellbarer Länge nach einem beliebigen der vorausgegangenen Ansprüche, dadurch gekennzeichnet, daß der genannte Hebel (32) einen gabelförmigen Grundabschnitt aufweist, zwischen dessen Zinken der genannte Nocken (31) liegt, der einen mittleren Hohlraum (45) aufweist, welcher ein Ende des genannten Haltezapfens (16) beherbergt, wobei der Hebel (32), der Nocken (31) und der Haltezapfen (16) ausgerichtete Bohrungen für die Befestigung des Ganzen mit Hilfe eines Stifts (25) aufweisen, der sich über die gesamte Länge des zylindrischen Hohlkörpers (11) erstreckt.

7. Ein Stock mit einstellbarer Länge nach einem beliebigen der vorausgegangenen Ansprüche, dadurch gekennzeichnet, daß der genannte Haltezapfen (16) längenverstellbar ist, um den Verriegelungsdruck der Feststellvorrichtung zu regulieren.

8. Ein Stock mit einstellbarer Länge nach einem beliebigen der vorausgegangenen Ansprüche, dadurch gekennzeichnet, daß der genannte zylindrische Hohlkörper (11) an einem Ende eine innere, ringförmige Erhebung (12) aufweist, die einen Anschlag für das Ende des genannten oberen röhrenförmigen Elements (2) bildet.

9. Ein Stock nach einem beliebigen der vorausgegangenen Ansprüche, dadurch gekennzeichnet, daß er mindestens ein röhrenförmiges Zwischenelement zwischen dem genannten oberen röhrenförmigen Element (2) und dem genannten unteren röhrenförmigen Element (3) umfaßt, wobei Feststellvorrichtungen (10) jeweils zwischen dem genannten Zwischenelement und dem genannten oberen (2) und unteren Element (3) vorgesehen sind.

10. Eine Feststellvorrichtung eines zylindrischen Elements (2, 3), das einen zylindrischen Hohlkörper (11) umfaßt, der das genannte zylindrische Element (2, 3) beherbergen kann, und das einen Längsschlitz (13) aufweist, der durch gegenüberliegende Vorsprünge (14, 15) des genannten zylindrischen Körpers (11) begrenzt wird, wobei ein Haltestift (16) quer durch die genannten Vorsprünge (14, 15) führt, mit dessen Ende ein Hebel (32) drehbar mit dem Nocken (31) verbunden ist, der auf eine Nockenfläche (30) einwirkt, die an der Außenwand des genannten Vorsprungs (14) vorgesehen ist, um die Vorsprünge (14, 15) jeweils einander zu nähern bezw. voneinander zu entfernen und folglich den genannten zylindrischen Hohlkörper (11) an dem zylindrischen Element (2, 3) zu verriegeln, bezw. den genannten zylindrischen Körper (11) zu lockern, dadurch gekennzeichnet, daß der Hebel (32) ein von dem Nocken (31) getrenntes Element ist und sich im Verhältnis zu diesem in einem vorbestimmten Winkel frei drehen kann, was einen Leerlauf des Hebels (32) zur Folge hat, während dessen der genannte Nocken (31) nicht mitgedreht wird.

11. Eine Feststellvorrichtung nach Anspruch 10, dadurch gekennzeichnet, daß der genannte Hebel (32) an seinem Grundabschnitt ein Zahnprofil (50) aufweist, das lose in einem Sitz (51) des genannten Nockens (31) untergebracht ist, und zwar so, daß der genannte Zahn (50) infolge einer Umdrehung des Hebels (32) in der einen oder anderen Richtung gegen die eine oder andere Seitenwand (52, 53) des genannten Sitzes (51) stößt, wodurch ein Leerlauf von etwa 30° verursacht wird.

12. Eine Feststellvorrichtung nach einem beliebigen der Ansprüche von 10 bis 11, dadurch gekennzeichnet, daß der genannte Hebel (32) in geschlossener Stellung in einem Sitz (34, 36) in dem genannten zylindrischen Hohlkörper (11) untergebracht ist, ohne über das Außenprofil desselben hinauszuragen, wobei Schnapp-Kupplungselemente (40, 41) zwischen dem genannten Hebel (31) und dem genannten zylindrischen Hohlkörper (11) vorgesehen sind, um die erfolgte Schließung des Hebels anzuzeigen.

## Revendications

1. Bâton d'une longueur variable comprenant au moins deux éléments tubulaires :
- un élément tubulaire supérieur (2) terminant par un manche,
- un élément tubulaire inférieur (3),
lesdits éléments tubulaires (2, 3) étant unis d'un point de vue télescopique entre eux et pouvant glisser l'un dans l'autre, avec l'élément supérieur (2) qui peut être serré sur l'élément inférieur (3) pour empêcher son coulissement axial et,
- au moins un dispositif de blocage (10) comprenant un corps cylindrique creux (11), pouvant accueillir la zone de raccord entre lesdits éléments tubulaires (2, 3), et présentant une fissure longitudinale (13) s'étendant sur toute sa longueur et délimitée par des saillies opposées (14, 15) du corps (11) traversées par un goujon de support (16), auquel est fixé un levier (32) relié de façon articulée à un profil à came (31) pouvant exercer en fermeture une action de poussée tendant à rapprocher lesdites saillies (14, 15) et donc à serrer ledit corps cylindrique creux (11) sur les tuyaux (2 et 3) et à exercer une action opposée en phase d'ouverture,
caractérisé par le fait que ledit levier (32) est séparé de ladite came (31) et peut tourner librement d'un certain angle par rapport à celle-ci, sans l'entraîner dans la rotation, de façon à ce qu'en phase d'ouverture le levier (32) puisse être soulevé du profil du corps (11) avec un moindre effort, pour être placé dans une position permettant à l'utilisateur de le prendre facilement.

2. Bâton réglable selon la revendication 1, caractérisé par le fait que ledit levier (32) présente, dans sa partie de base, un profil à dent (50) logeant avec du jeu dans une cavité (51) dans la came (31) en prenant position contre l'une ou l'autre des parois latérales (52, 53) de ladite cavité (51) pour une rotation dans un sens ou dans un autre du levier (32), définissant ainsi une course neutre du levier (32).

3. Bâton réglable selon la revendication 1 ou 2, caractérisé par le fait que ledit angle de rotation libre du levier (32) par rapport à la came (31) est de 30° environ.

4. Bâton réglable selon une revendication quelconque parmi les revendications susmentionnées, caractérisé par le fait que ledit levier (32) est placé dans un logement correspondant (34, 36) du corps (11), de façon à ne pas sortir de celui-ci, des dispositifs réciproques d'attache par encliquetage (40, 41) étant prévus respectivement sur le levier (32) et dans le corps (11) pour signaler que le dispositif s'est effectivement fermé.

5. Bâton d'une longueur réglable selon la revendication 4, caractérisé par le fait que ledit levier (32), en position de fermeture, place ladite came (31) dans une position correspondant parfaitement au point mort.

6. Bâton d'une longueur réglable selon une revendication quelconque parmi les revendications susmentionnées, caractérisé par le fait que ledit levier (32) a une partie de base à fourche, qui renferme entre ses branches ladite came (31), qui présente une cavité centrale (45) accueillant une extrémité dudit goujon de support (16), le levier (32), la came (31) et le goujon de support (16) en présentant des trous alignés pour la fixation de l'ensemble au moyen d'une goupille (25), s'étendant sur toute la longueur du corps cylindrique creux (11).

7. Bâton d'une longueur réglable selon une revendication quelconque parmi les revendications susmentionnées, caractérisé par le fait que ledit goujon de support (16) est réglable en longueur pour régler la pression de serrage du dispositif de blocage.

8. Bâton d'une longueur réglable selon une revendication quelconque parmi les revendications susmentionnées, caractérisé par le fait que ledit corps cylindrique creux (11) présente, à une extrémité, un relief annulaire intérieur (12), constituant une butée d'arrêt pour l'extrémité dudit élément tubulaire supérieur (2).

9. Bâton selon une revendication quelconque parmi les revendications susmentionnées, caractérisé par le fait qu'il comprend au moins un élément tubulaire intermédiaire entre ledit élément tubulaire supérieur (2) et ledit élément tubulaire inférieur (3), des dispositifs de blocage (10) respectifs étant prévus entre ledit élément intermédiaire et lesdits éléments supérieur (2) et inférieur (3).

10. Dispositif de blocage d'un élément cylindrique (2, 3), comprenant un corps cylindrique creux (11) pouvant recevoir ledit élément cylindrique (2, 3), et présentant une fente longitudinale (13), délimitée par des saillies opposées (14, 15) dudit corps cylindrique (11), lesdites saillies (14, 15) étant traversées transversalement par un goujon de support (16), à une extrémité duquel un levier (32) à came (31) est relié de façon articulée, agissant contre une surface à came (30) prévue sur la paroi extérieure de ladite saillie (14) pour rapprocher entre elles ou éloigner les saillies (14, 15) les unes des autres, et donc serrer ledit corps cylindrique creux (11) sur l'élément cylindrique (2, 3), ou desserrer ledit corps cylindrique (11), caractérisé par le fait que ledit levier (32) est un élément séparé de la came (31) et peut pivoter librement par rapport à celle-ci d'un angle prédéfini, qui définit une course neutre du levier (32), pendant laquelle ladite came (31) n'est entraînée dans aucune rotation.

11. Dispositif de blocage selon la revendication 10, caractérisé par le fait que ledit levier (32) présente, au niveau de sa partie de base, un profil à dent (50), placé avec du jeu dans un logement (51) de ladite came (31), de façon à ce qu'à la suite d'une rotation du levier (32) dans un sens ou dans un autre, ladite dent (50) prenne position contre l'une ou l'autre des parois latérales (52, 53) dudit logement (51), définissant une course neutre de 30° environ.

12. Dispositif de blocage selon une revendication quelconque parmi les revendications allant de 10 à 11, caractérisé par le fait que ledit levier (32) est placé, en position de fermeture, dans un logement (34, 36) dudit corps cylindrique creux (11), sans sortir du profil extérieur de celui-ci, des dispositifs d'attache par encliquetage (40, 41) étant prévus entre ledit levier (31) et ledit corps cylindrique creux (11) pour signaler que la fermeture du levier est arrivée.
